# EUROPEAN PATENT APPLICATION

(11) **EP 4 421 236 A1**
(43) Date of publication of application: **28.08.2024**
(21) Application number: 23866640.8
(22) Date of filing: 08.11.2023
(51) Int. Cl.: D21C 11/10, C08H 7/00

(54) **METHOD FOR EXTRACTING LIGNIN FROM SULFATE PULPING WASTE LIQUID**

(30) Priority: 27.12.2022 CN 202211687029
(71) Applicant: Shanghai Changfa New Materials Co., Ltd., Shanghai 200030 (CN)
(72) Inventor: QUENTIN, Shi, Shanghai 200030 (CN); ZHAO, Ji, Shanghai 200030 (CN); JIN, Xiachao, Shanghai 200030 (CN)
(74) Representative: Bayramoglu et al.
(86) International application number: PCT/CN2023/130408
(87) International publication number: WO 2024/139752

(57) **Abstract**

The present disclosure provides a method for extracting lignin from a sulfate-pulping spent liquor, including the following steps: (1) subjecting the sulfate-pulping spent liquor to a settlement treatment, removing a lower material liquid, and collecting an upper material liquid as a material A; (2) treating the material A with a 100-300 mesh filter to obtain a material B; (3) adjusting a temperature of the material B to 50°C to 70°C, and filtering the material B through a 5-10 µm precision filter to obtain a material C; (4) allowing the material C to enter a ceramic membrane system for lignin extraction, and collecting a concentrate to obtain a material D, where a molecular weight cut-off of a ceramic membrane is 1,000 to 3,000, a treatment temperature of the ceramic membrane is 50°C to 70°C, and a treatment pressure is 4 bar to 9 bar; (5) adding demineralized water to the material D, and conducting a dialysis desalination treatment to obtain a material E; and (6) subjecting the material E to evaporation and drying to obtain a lignin powder F. The present disclosure adopts a ceramic membrane for lignin extraction, which greatly reduces the contamination and blockage to the membrane, prolongs a service life of the membrane, and allows the efficient extraction of lignin from a sulfate-pulping spent liquor.

## Description

### TECHNICAL FIELD

The present disclosure relates to a method for extracting lignin from a sulfate-pulping spent liquor, and belongs to the technical field of papermaking.

### BACKGROUND

Sulfate pulping is definitely one of the most mainstream pulping methods in recent years. During the original caustic soda pulping process, sodium sulfide is used as an additive during the cooking process to further remove lignin from the raw material while also protecting cellulose to obtain a high-strength pulp. Sulfate pulping is used in the pulping and papermaking industries, and leads to a spent liquor with a chemical oxygen demand (COD) value as high as hundreds of thousands, which cannot easily be handled by wastewater treatment systems. Currently, there is no superior method for treating sulfate-pulping spent liquors, and combustion treatment is usually conducted to recover heat. Lignin in sulfate-pulping spent liquors is not well utilized.

Lignin is the main component of a spent liquor produced during pre-cooking in a sulfate-pulping process, and accounts for about 25% to 38% of the solid content in the spent liquor. Lignin is produced from the polymerization of an aromatic alcohol and present in woody tissues. Lignin mainly plays a role in hardening the cell wall by forming an interwoven network. Lignin is a main component of the secondary cell wall. Lignin is mainly located among the fibers of cellulose and serves as a supporting and anti-stress role. The lignin content in a woody plant is about 20% to 25%, and lignin is the second most abundant natural polymer in the nature. Lignin is non-toxic, exhibits excellent versatility in terms of performance, and has a wide range of applications in the industry. In addition, lignin structurally has a variety of groups, which make it easy to undergo a chemical reaction for modification. Lignin can be used to produce various chemical materials, such as dispersing agents and water-reducing admixtures in concrete. As a degradable eco-friendly material, lignin can well replace some non-degradable materials, which is of great significance for environmental protection.

Currently, a number of pulping and papermaking enterprises in China adopt a sulfate-pulping process, and spent liquors are produced in large quantities every year accordingly. However, these spent liquors are not well utilized. Sun Paper, Juntai Paper, and Qingshan Paper each have a sulfate-pulping capacity of hundreds of thousands of tons, and lead to nearly one million tons of sulfate-pulping spent liquors accordingly. Currently, in the pulping and papermaking industries, sulfate-pulping spent liquors are almost rarely utilized, and the vast majority of sulfate-pulping spent liquors can only be used for combustion. Only a small amount of sulfate-pulping spent liquors is currently used for further high-valued treatments such as lignin extraction. During the traditional process of extracting lignin from a pulping spent liquor, an acid is added to the pulping spent liquor, such that lignin is precipitated and separated. During this acid-precipitation process, a large amount of hydrogen sulfide waste gas and a large amount of liquid waste are produced, and the introduction of the acid has a great impact on the combustion treatment of the original spent liquor to destroy the balance of the system. In recent years, a process of extracting lignin with an organic ultrafiltration membrane has appeared. This ultrafiltration process is more eco-friendly than the acid-precipitation method. However, the pulping spent liquor has a high impurity content, which may cause heavy contamination and blockage to the ultrafiltration membrane, thus greatly reducing the service life of the ultrafiltration membrane. The frequent replacement of ultrafiltration membranes causes an increase in lignin production cost, and there is a specified risk of contamination during the frequent replacement of spent ultrafiltration membranes.

Therefore, there is an urgent need to develop an efficient and eco-friendly utilization solution for a sulfate-pulping spent liquor in this field to allow the efficient utilization of the sulfate-pulping spent liquor and the high-valued utilization of resources.

### SUMMARY

The present disclosure provides a method for extracting lignin from a sulfate-pulping spent liquor, including the following steps:
(1) subjecting the sulfate-pulping spent liquor to a settlement treatment, removing a lower material liquid, and collecting an upper material liquid as a material A;
(2) treating the material A with a 100-300 mesh filter to obtain a material B;
(3) adjusting a temperature of the material B to 50°C to 70°C, and filtering the material B through a 5-10 µm precision filter to obtain a material C;
(4) allowing the material C to enter a ceramic membrane system for lignin extraction, and collecting a concentrate to obtain a material D, where a molecular weight cut-off of a ceramic membrane is 1,000 to 3,000, a treatment temperature of the ceramic membrane is 50°C to 70°C, and a treatment pressure is 4 bar to 9 bar;
(5) adding demineralized water to the material D, and conducting a dialysis desalination treatment to obtain a material E; and
(6) subjecting the material E to evaporation and drying to obtain a lignin powder F.

Preferably, in the step (1), the sulfate-pulping spent liquor is derived from a process of cooking a wood at 155°C to 165°C for 2 h to 3 h with a combination of sodium sulfate and caustic soda as a cooking agent, where the wood is preferably one or more of a eucalyptus wood, a poplar wood, and a pine wood; and/or
in the step (1), a pH of the sulfate-pulping spent liquor is 13 to 14; and/or
in the step (1), a density of the sulfate-pulping spent liquor is 1.04 g/mL to 1.09 g/mL and preferably 1.06 g/mL to 1.08 g/mL; and/or
in the step (1), a solid content of the sulfate-pulping spent liquor is 15% to 18% and preferably 15% to 16%; and/or
in the step (1), a content of lignin in a solid of the sulfate-pulping spent liquor is 25% to 38% and preferably 28% to 33%.

Preferably, the step (1) is specifically as follows: placing the sulfate-pulping spent liquor in a storage tank, thoroughly stirring the sulfate-pulping spent liquor, stopping the stirring, and allowing the sulfate-pulping spent liquor to stand for 12 h to 24 h; and removing a lower material liquid enabling a liquid level of about 5% to 10% in the storage tank, and collecting a corresponding upper material liquid as the material A.

Preferably, in the step (2), the 100-300 mesh filter is one or more of a plate or frame filter.

Preferably, in the step (3), the 5-10 µm precision filter is one or more of a bag-type or filter rod-type cartridge filter; and/or
in the step (3), the precision filtering is conducted at 50°C to 70°C and preferably 60°C to 70°C; and/or
in the step (3), a solid content of the material C is 14% to 17%.

Preferably, in the step (4), the molecular weight cut-off of the ceramic membrane is 1,000 to 2,000, the treatment temperature of the ceramic membrane is 60°C to 70°C, and the treatment pressure is 7 bar to 9 bar; and/or
in the step (4), a solid content of the material D is 19% to 23%; and/or
in the step (4), a mass percentage of lignin in a solid of the material D is 45% to 55% and preferably 50% to 55%; and/or
in the step (4), a density of the material D is 1.12 g/mL to 1.19 g/mL and preferably 1.12 g/mL to 1.16 g/mL.

Preferably, in the step (5), an amount of the water used for the dialysis is 10% to 30% of an amount of the material C; and/or
in the step (5), the dialysis treatment is conducted at 50°C to 70°C and preferably 60°C to 70°C; and/or
in the step (5), the dialysis treatment is conducted with a treatment pressure of 4 bar to 9 bar and preferably 7 bar to 9 bar; and/or
in the step (5), a density of the material E is 1.1 g/mL to 1.17 g/mL and preferably 1.10 g/mL to 1.14 g/mL; and/or
in the step (5), a mass percentage of lignin in a solid of the material E is 60% to 75% and preferably 65% to 70%.

Preferably, in the step (6), the evaporation is triple-effect evaporation; and/or
in the step (6), the drying is centrifugal spray drying, and when the centrifugal spray drying is adopted, a hot-blast stove has an inlet temperature of 280°C to 350°C and preferably 290°C to 330°C and an outlet temperature of 90°C to 120°C and preferably 105°C to 115°C; and/or
in the step (6), a particle size of the lignin powder is 50 mesh to 80 mesh.

On the basis of conforming to common knowledge in the art, the above-mentioned preferred conditions can be combined arbitrarily to obtain preferred embodiments of the present disclosure.

Among the above steps, the first three steps are mainly pretreatment steps, and a total impurity content of about 1% is treated. In the step (1), large-particle impurities and high-specific gravity impurities are mainly removed, such as sediments and wood residues. The step (2) is a supplementary treatment to avoid an incomplete treatment of the step (1). The step (3) is intended to treat fine fibers to prevent membrane pores from being blocked. The step (4) is mainly intended to extract an active substance (the product). The dialysis in the step (5) is intended to reduce a salt content in the product.

The present disclosure has the following beneficial effects:
(1) Compared with the conventional ultrafiltration membrane that is currently used, the ceramic membrane adopted in the present disclosure requires a low treatment pressure and thus involves a low energy consumption. In addition, a life span of the ceramic membrane can be as high as 3 to 5 years, and thus is suitable for large-scale industrial applications.
(2) When the ceramic membrane is used to directly extract lignin from a sulfate-pulping spent liquor, the acid precipitation of a black liquor is not required, and the ceramic membrane exhibits excellent contamination and blockage resistance. In addition, a small amount of an oxidizing agent can be used in a regeneration process of the ceramic membrane to greatly prolong a service life of the ceramic membrane, greatly reduce the production of wastewater and waste gases during a lignin extraction process, and avoid the pollution problem caused by waste membranes, which further improves the feasibility of comprehensive utilization of sulfate-pulping spent liquors. Through creative efforts, the present disclosure can very efficiently improve a service life of the membrane, reduce the production of waste gases and wastewater, and greatly reduce a quantity of waste membranes, which allows the characteristic of easy promotion. In addition, a lignin product prepared by the present disclosure has excellent performance, which is conducive to the subsequent high-valued utilization of lignin.
(3) The sulfate-pulping spent liquor used as a raw material in the present disclosure is a spent liquor produced from the current most mainstream pulping process. The sulfate-pulping spent liquor has a high lignin content and is generally representative, which is conducive to the subsequent promotion.

### DETAILED DESCRIPTION OF THE EMBODIMENTS

The present disclosure is further described below through examples, but the present disclosure is not limited to the scope of the described examples. The experimental methods in the following examples which are not specified with specific conditions are conducted according to conventional conditions or according to product instructions.

In the following examples, a lignin content is determined by a Klason method. The Klason method is as follows: a sample to be tested is treated with a sulfuric acid aqueous solution with a mass percentage of 50%, then water is added to reduce a pH of a resulting system to 1 to 3, the system is boiled and subjected to solid-liquid separation through vacuum suction filtration, and a resulting solid is collected and oven-dried. A mass percentage content of lignin = a mass of an insoluble substance after oven-drying/a mass of an absolutely-dried sample to be tested Í 100%.

In the following examples and comparative example, a preparation method of a sulfate-pulping spent liquor specifically includes the following steps: cooking is conducted at 155°C to 165°C for 2 h to 3 h with a combination of sodium sulfate and caustic soda as a cooking agent, and a spent liquor produced is collected, which is the sulfate-pulping spent liquor.

### Example 1

In this example, a sulfate-pulping spent liquor had a solid content of 15%, a density of 1.05 g/mL, and a pH of 13.0, and a mass percentage of lignin in a solid of the sulfate-pulping spent liquor was 28%.

A method for extracting lignin from a sulfate-pulping spent liquor was provided, including the following steps:
(1) The sulfate-pulping spent liquor was pumped into a storage tank in a workshop through a pipeline of a pulping line until the storage tank was fully filled, and then the sulfate-pulping spent liquor was thoroughly stirred and allowed to stand for 12 h; and a lower material liquid enabling a liquid level of 5% in the storage tank was removed, and a corresponding upper material liquid was collected as a material A.
(2) The material A was filtered by a 100-mesh plate filter to obtain a material B.
(3) A temperature of the material B was adjusted to 50°C by a heat exchanger, then the material B was further filtered by a 10 µm bag-type cartridge filter, and a resulting filtrate was collected as a material C with a solid content of 14%.
(4) The material C was treated by a ceramic membrane with a molecular weight cut-off of 3,000 to obtain a concentrate and a filtrate, and the concentrate was collected as a material D. The membrane treatment was conducted at 50°C with a treatment pressure of 4 bar. The material D had a solid content of 20% and a density of 1.13 g/mL. A mass percentage of lignin in a solid of the material D was 45%.
(5) The material D was subjected to a dialysis treatment at 50°C with a treatment pressure of 4 bar to obtain a material E. An amount of water used for the dialysis treatment was 10% of an amount of the material C. The material E had a solid content of 18% and a density of 1.10 g/mL. A mass percentage of lignin in a solid of the material E was 60%.
(6) The material E was subjected to evaporation with a triple-effect evaporator, and then spray-dried by a centrifugal spray dryer with an inlet temperature of 280°C and an outlet temperature of 90°C to obtain a lignin powder F with a particle size of 50 mesh.

### Example 2

In this example, a sulfate-pulping spent liquor had a solid content of 17%, a density of 1.07 g/mL, and a pH of 13.5, and a mass percentage of lignin in a solid of the sulfate-pulping spent liquor was 30%.

A method for extracting lignin from a sulfate-pulping spent liquor was provided, including the following steps:
(1) The sulfate-pulping spent liquor was pumped into a storage tank in a workshop through a pipeline of a pulping line until the storage tank was fully filled, and then the sulfate-pulping spent liquor was thoroughly stirred and allowed to stand for 18 h; and a lower material liquid enabling a liquid level of 8% in the storage tank was removed, and a corresponding upper material liquid was collected as a material A.
(2) The material A was filtered by a 200-mesh plate filter to obtain a material B.
(3) A temperature of the material B was adjusted to 60°C by a heat exchanger, then the material B was further filtered by an 8 µm bag-type cartridge filter, and a resulting filtrate was collected as a material C with a solid content of 16%.
(4) The material C was treated by a ceramic membrane with a molecular weight cut-off of 2,000 to obtain a concentrate and a filtrate, and the concentrate was collected as a material D. The membrane treatment was conducted at 60°C with a treatment pressure of 7 bar. The material D had a solid content of 21% and a density of 1.16 g/mL. A mass percentage of lignin in a solid of the material D was 50%.
(5) The material D was subjected to a dialysis treatment at 60°C with a treatment pressure of 7 bar to obtain a material E. An amount of water used for the dialysis treatment was 20% of an amount of the material C. The material E had a solid content of 19% and a density of 1.14 g/mL. A mass percentage of lignin in a solid of the material E was 70%.
(6) The material E was subjected to evaporation with a triple-effect evaporator, and then spray-dried by a centrifugal spray dryer with an inlet temperature of 300°C and an outlet temperature of 110°C to obtain a lignin powder F with a particle size of 60 mesh.

### Example 3

In this example, a sulfate-pulping spent liquor was adopted as a raw material. The sulfate-pulping spent liquor had a solid content of 18%, a density of 1.09 g/mL, and a pH of 14.0, and a mass percentage of lignin in a solid of the sulfate-pulping spent liquor was 36%.

A method for extracting lignin from a sulfate-pulping spent liquor was provided, including the following steps:
(1) The sulfate-pulping spent liquor was pumped into a storage tank in a workshop through a pipeline of a pulping line until the storage tank was fully filled, and then the sulfate-pulping spent liquor was thoroughly stirred and allowed to stand for 24 h; and a lower material liquid enabling a liquid level of 10% in the storage tank was removed, and a corresponding upper material liquid was collected as a material A.
(2) The material A was filtered by a 300-mesh frame filter to obtain a material B.
(3) A temperature of the material B was adjusted to 70°C by a heat exchanger, then the material B was further filtered by a 5 µm bag-type cartridge filter, and a resulting filtrate was collected as a material C with a solid content of 17%.
(4) The material C was treated by a ceramic membrane with a molecular weight cut-off of 1,000 to obtain a concentrate and a filtrate, and the concentrate was collected as a material D. The membrane treatment was conducted at 70°C with a treatment pressure of 9 bar. The material D had a solid content of 23% and a density of 1.19 g/mL. A mass percentage of lignin in a solid of the material D was 55%.
(5) The material D was subjected to a dialysis treatment at 70°C with a treatment pressure of 9 bar to obtain a material E. An amount of water used for the dialysis treatment was 30% of an amount of the material D. The material E had a solid content of 20% and a density of 1.14 g/mL. A mass percentage of lignin in a solid of the material E was 75%.
(6) The material E was subjected to evaporation with a triple-effect evaporator to obtain a material F with a solid content of 42%.
(7) The material F was spray-dried by a centrifugal spray dryer with an inlet temperature of 330°C and an outlet temperature of 120°C to obtain a lignin powder F with a particle size of 80 mesh.

### Comparative Example 1

In this comparative example, a sulfate-pulping spent liquor had a solid content of 17%, a density of 1.07 g/mL, and a pH of 13.5, and a mass percentage of lignin in a solid of the sulfate-pulping spent liquor was 30%.

A method for extracting lignin from a sulfate-pulping spent liquor was provided, including the following steps:
(1) The sulfate-pulping spent liquor was pumped into a storage tank in a workshop through a pipeline of a pulping line until the storage tank was fully filled, and then the sulfate-pulping spent liquor was thoroughly stirred and allowed to stand for 18 h; and a lower material liquid enabling a liquid level of 8% in the storage tank was removed, and a corresponding upper material liquid was collected as a material A.
(2) The material A was filtered by a 200-mesh plate filter to obtain a material B.
(3) A temperature of the material B was adjusted to 60°C by a heat exchanger, then the material B was further filtered by an 8 µm bag-type cartridge filter, and a resulting filtrate was collected as a material C with a solid content of 16%.
(4) The material C was treated by an ultrafiltration membrane with a molecular weight cut-off of 2,000 to obtain a concentrate and a filtrate, and the concentrate was collected as a material D. The membrane treatment was conducted at 60°C with a treatment pressure of 15 bar. The material D had a solid content of 21% and a density of 1.16 g/mL. A mass percentage of lignin in a solid of the material D was 50%.
(5) The material D was subjected to a dialysis treatment at 60°C with a treatment pressure of 15 bar to obtain a material E. An amount of water used for the dialysis treatment was 20% of an amount of the material D. The material E had a solid content of 19% and a density of 1.13 g/mL. A mass percentage of lignin in a solid of the material E was 65%.
(6) The material E was subjected to evaporation with a triple-effect evaporator, and then spray-dried by a centrifugal spray dryer with an inlet temperature of 300°C and an outlet temperature of 110°C to obtain a lignin powder F with a particle size of 60 mesh.

### Implementation effects:

The lignin powders prepared in Examples 1 to 3 and Comparative Example 1 each were tested for a lignin content, an average membrane flux, and a membrane flux change. Test results are shown in Table 1. An average daily membrane flux refers to a volume of a sample passing through a unit area per unit time, and a membrane flux change refers to (a flux after half a year of continuous operation - an initial flux)/the initial flux.

**Table 1**

| No. | Treatment pressure in the step (4) bar | Lignin content % | Initial membrane flux L/(m²·h) | Membrane flux change % |
|---|---|---|---|---|
| Example 1 | 4 | 60 | 25 | -10% |
| Example 2 | 7 | 70 | 24 | -8% |
| Example 3 | 9 | 75 | 20.5 | -5% |
| Comparative Example 1 | 15 | 65 | 25 | -50% |

It can be seen from Table 1 that Examples 1 to 3 have a similar initial membrane flux to Comparative Example 1, but the examples of the present disclosure have a lower treatment pressure than the comparative example, and most importantly have a smaller membrane flux change than the comparative example, which also indicates that the ceramic membrane adopted in the present disclosure has a long life span.

The above examples are preferred implementations of the present disclosure, but the implementations of the present disclosure are not limited to these examples, and any other changes, modifications, substitutions, combinations, and simplifications made without departing from the spirit and principle of the present disclosure shall be equivalent replacement means, and shall be included in the protection scope of the present disclosure.

## Claims

1. A method for extracting lignin from a sulfate-pulping spent liquor, comprising the following steps:
(1) subjecting the sulfate-pulping spent liquor to a settlement treatment, removing a lower material liquid, and collecting an upper material liquid as a material A;
(2) treating the material A with a 100-300 mesh filter to obtain a material B;
(3) adjusting a temperature of the material B to 50°C to 70°C, and filtering the material B through a 5-10 µm precision filter to obtain a material C;
(4) allowing the material C to enter a ceramic membrane system for lignin extraction, and collecting a concentrate to obtain a material D, wherein a molecular weight cut-off of a ceramic membrane is 1,000 to 3,000, a treatment temperature of the ceramic membrane is 50°C to 70°C, and a treatment pressure is 4 bar to 9 bar;
(5) adding demineralized water to the material D, and conducting a dialysis desalination treatment to obtain a material E; and
(6) subjecting the material E to evaporation and drying to obtain a lignin powder F.

2. The method for extracting the lignin from the sulfate-pulping spent liquor according to claim 1, wherein in the step (1),
the sulfate-pulping spent liquor is derived from a process of cooking a wood at 155°C to 165°C for 2 h to 3 h with a combination of sodium sulfate and caustic soda as a cooking agent, preferably, the wood is one or more of a eucalyptus wood, a poplar wood, and a pine wood; and/or
in the step (1), a pH of the sulfate-pulping spent liquor is 13 to 14; and/or
in the step (1), a density of the sulfate-pulping spent liquor is 1.04 g/mL to 1.09 g/mL; and/or
in the step (1), a solid content of the sulfate-pulping spent liquor is 15% to 18%; and/or
in the step (1), a content of lignin in a solid of the sulfate-pulping spent liquor is 25% to 38%.

3. The method for extracting the lignin from the sulfate-pulping spent liquor according to claim 1, wherein the step (1) is specifically as follows: placing the sulfate-pulping spent liquor in a storage tank, thoroughly stirring the sulfate-pulping spent liquor, stopping the stirring, and allowing the sulfate-pulping spent liquor to stand for 12 h to 24 h; and removing a lower material liquid enabling a liquid level of about 5% to 10% in the storage tank, and collecting a corresponding upper material liquid as the material A.

4. The method for extracting the lignin from the sulfate-pulping spent liquor according to claim 1, wherein in the step (2), the 100-300 mesh filter is one or more of a plate or frame filter.

5. The method for extracting the lignin from the sulfate-pulping spent liquor according to claim 1, wherein in the step (3), the 5-10 µm precision filter is one or more of a bag-type or filter rod-type cartridge filter; and/or
in the step (3), the filtering is conducted at 50°C to 70°C; and/or
in the step (3), a solid content of the material C is 14% to 17%.

6. The method for extracting the lignin from the sulfate-pulping spent liquor according to claim 1, wherein in the step (4),
the molecular weight cut-off of the ceramic membrane is 1,000 to 2,000, the treatment temperature of the ceramic membrane is 60°C to 70°C, and the treatment pressure is 7 bar to 9 bar; and/or
in the step (4), a solid content of the material D is 19% to 23%; and/or
in the step (4), a mass percentage of lignin in a solid of the material D is 45% to 55%; and/or
in the step (4), a density of the material D is 1.12 g/mL to 1.19 g/mL.

7. The method for extracting the lignin from the sulfate-pulping spent liquor according to claim 1, wherein in the step (5), an amount of the water used for the dialysis is 10% to 30% of an amount of the material C; and/or
in the step (5), the dialysis treatment is conducted at 50°C to 70°C; and/or
in the step (5), the dialysis treatment is conducted with a treatment pressure of 4 bar to 9 bar; and/or
in the step (5), a density of the material E is 1.1 g/mL to 1.17 g/mL; and/or
in the step (5), a mass percentage of lignin in a solid of the material E is 60% to 75%.

8. The method for extracting the lignin from the sulfate-pulping spent liquor according to claim 1, wherein in the step (6), the evaporation is triple-effect evaporation; and/or
in the step (6), the drying is centrifugal spray drying, and when the centrifugal spray drying is adopted, a hot-blast stove has an inlet temperature of 280°C to 350°C and preferably 290°C to 330°C and an outlet temperature of 90°C to 120°C and preferably 105°C to 115°C; and/or
in the step (6), a particle size of the lignin powder is 50 mesh to 80 mesh.
